# EUROPEAN PATENT APPLICATION

(11) **EP 2 296 441 A2**
(43) Date of publication of application: **16.03.2011**
(21) Application number: 10175037.0
(22) Date of filing: 02.09.2010
(51) Int. Cl.: H05B 33/08

(54) **LED lighting device and illumination apparatus**

(30) Priority: 04.09.2009 JP 2009205088
(71) Applicant: Toshiba Lighting & Technology Corporation, Yokosuka-shi Kanagawa 237-8510 (JP)
(72) Inventor: Otake, Hirokazu, Yokosuka-shi Kanagawa 237-8510 (JP)
(74) Representative: Kramer - Barske - Schmidtchen

(57) **Abstract**

The present invention provides a rectifying circuit for rectifying AC voltage that is input from an AC source via a phase control type dimmer; a converter for converting DC output voltage of the rectifying circuit and lighting an LED; a positive characteristic feed-forward controlling unit for monitoring the AC voltage and changing the output current of the converter in accordance with a value of the AC voltage; and a positive characteristic feed-forward control limiting unit for, when the AC voltage reaches a predetermined value, limiting control performed by the positive characteristic feed-forward controlling unit.

## Description

### FIELD

The present invention relates to an LED lighting device capable of light control and an illumination apparatus provided with the LED lighting device.

### BACKGROUND

A two-wire phase control type dimmer using a phase control element such as a triac is widely used as a dimmer for incandescent bulbs. Therefore, if light from an LED can be controlled with use of the dimmer, a low-power type illumination system with a light control function can be conveniently realized only by exchanging light sources without renewing existing equipment and wiring. However, there actually exist the following problems.
(1) When the LED is lit at a low current level, no self-holding current of the phase control element of the dimmer can be secured, thereby causing flickering in the LED brightness. That is, in the case of lighting the LED at the same brightness, required self-holding current cannot be secured by current flowing in the LED since the current flowing in the LED is smaller than that flowing in an incandescent bulb.
(2) Although the dimmer includes a timer circuit having a time constant circuit for turning on the phase control element at a desired phase, operation current for operating the timer circuit cannot be supplied to the dimmer from the moment when an AC source is turned on. Therefore, the dimmer cannot be operated. Moreover, a converter for driving the LED is not activated in turning on the AC source and it takes time to activate the converter.

In order to solve the above problems, AC voltage, which has a controlled phase, of the dimmer is monitored, conversion into a PWM signal corresponding to the AC voltage is made, and the converter is subjected to positive characteristic feed-forward control, and thus current for lighting the LED is changed and light from the LED is controlled in accordance with operation of the dimmer. In addition, an LED lighting device is known which includes a dynamic dummy load, which is arranged in parallel with a converter, receives a control signal from the converter and adjusts a load in response to the control signal, and thus respectively supplies self-holding current of a phase control element of a dimmer and operation current of a timer circuit when necessary.

In the above prior art, when a conduction angle of the dimmer becomes large and AC voltage increases, an on-duty of the converter is widened, current to be supplied to the LED increases in accordance with an effective value of the AC voltage, and consequently the light emission amount of the LED increases. On the other hand, when the conduction angle of the dimmer becomes small, since the on-duty is narrowed, current to be supplied to the LED decreases and the light emission amount of the LED decreases.

However, it frequently occurs that AC voltage to be input to the LED lighting device fluctuates depending on not only operation by the dimmer but also the surrounding environment and is supplied at a value higher than that of a rated voltage. When the prior art is thus used under a state where the AC voltage is high, output current increased by positive characteristic feed-forward control based on a rise in the AC voltage is added to the output current increased by the increase in the AC voltage. Thus, when assuming the maximum value of the output current preset when the AC voltage is the rated voltage is set to a rated value, a value of the output current becomes larger than the preset rated value when the AC voltage exceeds the rated voltage for some reason. Consequently, the life of the LED is shortened due to overload lighting, further, the life of an illumination apparatus, on which electronic parts of the LED lighting device and an LED are mounted, is shortened due to a temperature rise caused by a large output current, and the illumination apparatus is likely to be broken by heat generation.

The present invention aims to provide an LED lighting device that stops positive characteristic feed-forward control to suppress an undesirable increase in the output current when AC voltage exceeding a preset predetermined value is input, and an illumination apparatus provided with the LED lighting device.

### BRIEF DESCRIPTION OF THE DRAWINGS

Fig. 1 is a circuit diagram of an LED lighting device of an embodiment of the present invention.
Fig. 2 is a circuit diagram of a dimmer.
Fig. 3 is a graph explaining an example of an AC voltage-output current property of the LED lighting device.
Fig. 4 is a vertical cross sectional view of an LED bulb which is an illumination apparatus provided with the LED lighting device.

### DETAILED DESCRIPTION

An LED lighting device of the embodiment includes: a rectifying circuit for rectifying AC voltage input from an AC source via a phase control type dimmer; a converter for converting DC output voltage of the rectifying circuit and lighting an LED; a positive characteristic feed-forward controlling unit for monitoring the AC voltage to change the output current of the converter in accordance with a value of the AC voltage; and a positive characteristic feed-forward control limiting unit for, when the AC voltage reaches a predetermined value, limiting control performed by the positive characteristic feed-forward controlling unit.

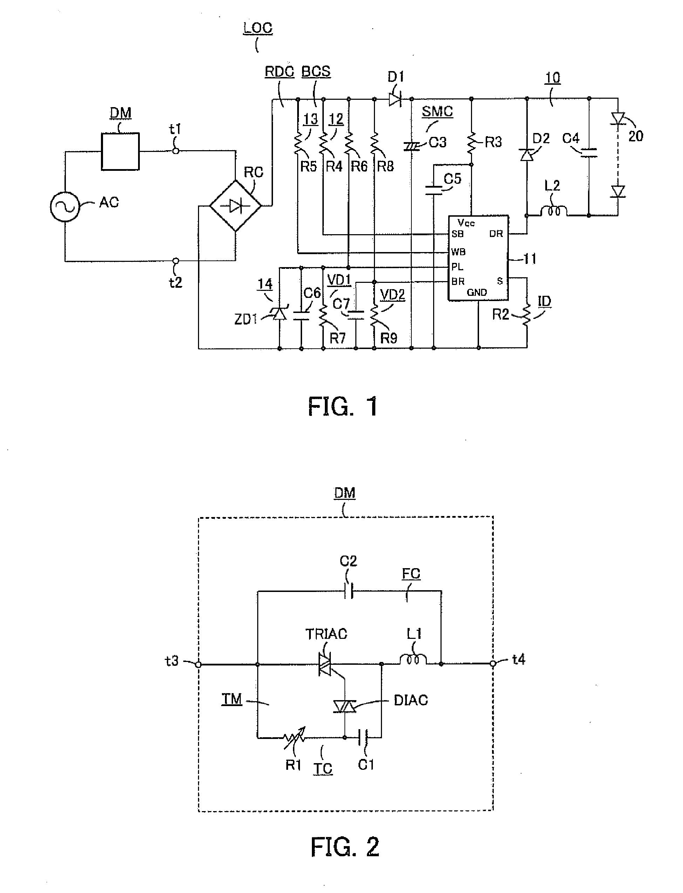

Next, the embodiment will be described with reference to Figs. 1 to 4.

As shown in Fig. 1, the LED lighting device includes a pair of input terminals t1 and t2, and an LED lighting circuit LOC, the input terminals t1 and t2 are connected to an AC source AC via a dimmer DM, and an LED 20 is connected to an output end of the LED lighting circuit LOC to light the LED 20.

The pair of input terminals t1 and t2 are input terminals of the LED lighting device and connected to the AC source AC via the dimmer DM in series.

As shown in Fig. 2, the dimmer DM is a two-wire phase control type dimmer, and includes a pair of terminals t3 and t4, a phase control element TRIAC, a timer circuit TM and a filter circuit FC. The pair of terminals t3 and t4 are inserted into an AC line in series.

The phase control element TRIAC includes, for example, a bidirectional thyristor or a pair of thyristors connected in reverse parallel, and main electrodes of the pair of thyristors are connected between the pair of terminals t3 and t4.

The timer circuit TM includes a series circuit of a variable resistor R1, a capacitor C1, a time constant circuit TC connected to the phase control element TRIAC in parallel, and a trigger element DIAC such as a diac having one end connected to an output end of the time constant circuit TC. The other end of the trigger element DIAC is connected to a gate electrode of the phase control element TRIAC.

The filter circuit FC includes an inductor L1 connected to the phase control element TRIAC in series, a capacitor C2 connected to a series circuit of the phase control element TRIAC and the inductor L1 in parallel.

Thus, when AC voltage is applied between the pair of terminals t3 and t4 of the dimmer DM, the time constant circuit TC operates first, and then potential of the output end of the time constant circuit reaches the trigger voltage of the trigger element DIAC. Thereby, gate current from the time constant circuit TC flows into a gate of the phase control element TRIAC via the trigger element DIAC and the phase control element TRIAC is turned on. Therefore, a phase angle, that is, a conduction angle of turn-on of the phase control element TRIAC is changed and a dimming degree is changed, since a time constant is changed by operating the variable resistor R1 and changing a resistance value of the variable resistor R1. Consequently, the dimmer DM changes its output voltage in accordance with a dimming degree determined by operation of the variable resistor R1.

As shown in Fig. 1, the LED lighting circuit LOC includes a rectifying circuit RC, a converter 10, a bleeder current extracting unit BCS, a positive characteristic feed-forward control limiting unit 14 and an LED driving IC 11 as a positive characteristic feed-forward controlling unit.

The rectifying circuit RC rectifies AC voltage that is input via the pair of input terminals t1 and t2 and subjected to phase control by the dimmer DM. Moreover, a smoothing circuit SMC can be arbitrarily added to the rectifying circuit RC. In the embodiment, the smoothing circuit SMC is constituted by a smoothing capacitor C3 connected between DC output ends of the rectifying circuit RC. In Fig. 1, a diode D1 inserted between the output end of the rectifying circuit RC and the smoothing capacitor C3 is used for wrap around prevention. Accordingly, in the embodiment, the rectifying circuit RC, the diode D1 and the smoothing capacitor C3 constitute a rectification DC source RDC.

The converter 10 converts AC voltage obtained from the rectifying circuit RC into voltage suitable for the LED 20 of a load and lights the LED 20. In the embodiment, the converter 10 includes a step-down chopper. That is, the converter 10 includes a switching element, a switching element controlling and driving unit, an inductor L2, a freewheel diode D2, an output capacitor C4 and a current detecting unit ID. Moreover, in the above components, both the switching element and the switching element controlling and driving unit or only the unit can be constituted by the LED driving IC 11 made IC compatible. Both the element and the unit are built in the LED driving IC 11 of the embodiment.

That is, the LED driving IC 11 subjects the LED 20 to light control and lights the LED 20 with use of the two-wire phase control type dimmer DM, and has a function of the switching element, a function of controlling and driving the switching element, and a function of controlling the bleeder current extracting unit BCS.

The switching element is constituted by an FET in the embodiment.

In the function of controlling and driving the switching element, there are at least provided: a positive characteristic feed-forward controlling unit for monitoring AC voltage subjected to phase control by the dimmer DM and converting, in accordance with the value of the AC voltage, output current of the converter 10 into, such as a PWM signal having a variable on-duty; a drive signal generating unit for generating a drive signal of the switching element in accordance with control by the positive characteristic feed-forward controlling unit; and a controlling unit for controlling the bleeder current extracting unit BCS associated with operation of the converter 10.

Regarding the step-down chopper constituting the converter 10, a series circuit of the LED driving IC 11, the inductor L2 and the output capacitor C4 is connected to both ends of the smoothing capacitor C3, which are output ends of the rectification DC source RDC, and the inductor L2, the freewheel diode D2 and the output capacitor C4 are connected so as to form a closed circuit. Moreover, when the switching element of the LED driving IC 11 is turned on, increased current flows into a series circuit of the LED driving IC 11, the inductor L2 and an output capacitor C5 from the rectification DC source RDC and the inductor L2 is charged. When the switching element of the LED driving IC 11 is then turned off, decreased current flows from the inductor L2 via the free wheel diode D2, and the output capacitor C4 is charged. Both ends of the output capacitor C4 become output ends of the converter 10 and the LED 20 is connected thereto.

The current detecting unit ID includes a resistor R2 having a small resistance value and is connected between an S terminal and a GND terminal of the LED driving IC 11. Further, the current detecting unit ID detects current flowing into the converter 10 from the rectification DC source RDC as current corresponding to load current flowing in the converter 10 and inputs the current into the S terminal of the LED driving IC 11. Thus, the LED driving IC 11 controls an on-duty of the step-down chopper, therefore the LED 20 of the load can be stably lit. Additionally, the current detecting unit ID cooperates with the LED driving IC 11 so as to contribute to the control of the bleeder current extracting unit BCS as described below.

Moreover, the LED driving IC 11 includes many terminals, in addition to the above terminals, for example, a Vcc terminal, DR terminal, S terminal, GND terminal, BR terminal, PL terminal, WB terminal, SB terminal, etc., as shown in Fig. 1. Among the each of the terminals, the Vcc terminal is connected to a connection point of a resistor R3 and the capacitor C5 in a series circuit of the resistor R3 and capacitor C5 which are connected to a positive electrode of the rectification DC source RDC, and supplies control power Vcc to the LED driving IC 11. The DR terminal is connected to a drain of the switching element of the LED driving IC 11, and the S terminal is connected to a source of the switching element of the LED driving IC 11. The GND terminal is connected to an external stable potential.

The bleeder current extracting unit BCS includes first and second bleeder current circuits 12 and 13 both connected to the converter 10 in parallel, and dynamically extracts, associated with operation of the converter 10, each current (described below) necessary for normally operating the dimmer DM to the LED 20 as well.

The first bleeder current circuit 12 is constituted in a manner that one end of a resistor R4 is connected to a positive electrode of the rectifying circuit RC and the other end thereof is connected to the SB terminal of the LED driving IC 11. And, the first bleeder current circuit 12 extracts bleeder current, which can operate the timer circuit TM for turning on the phase control element TRIAC of the dimmer DM, during the period from the activation of AC voltage to turning-on of the phase control element TRIAC.

The second bleeder current circuit 13 is constituted in a manner that one end of a resistor R5 is connected to the positive electrode of the rectifying circuit RC and the other end thereof is connected to the WB terminal of the LED driving IC 11. And, the second bleeder current circuit 13 extracts holding current of the phase control element TRIAC during the period from the turning-on of the phase control element TRIAC of the dimmer DM to the end of a half-wave of the AC voltage.

The positive characteristic feed-forward control limiting unit 14 includes a voltage divider circuit VD1 and a Zener diode ZD1. And, the voltage divider circuit VD1 includes a series circuit of resistors R6 and R7 and a capacitor C6 connected to the resistor R7 in parallel, one end of the resistor R6 side is connected between the DC output ends of the rectifying circuit RC, and a connection point of the resistors R6 and R7 is connected to the PL terminal of the LED driving IC 11. The Zener diode ZD1 is connected to a parallel circuit of the resistor R7 and the capacitor C6 in parallel.

A voltage diverter circuit VD2 is connected to the BR terminal of the LED driving IC 11. The voltage divider circuit VD2 includes a series circuit of resistors R8 and R9 and a capacitor C7 connected to the resistor R9 in parallel, one end of the resistor R8 side is connected between the DC output ends of the rectifying circuit RC, and a connection point of the resistors R8 and R9 is connected to the BR terminal of the LED driving IC 11.

Next, circuit operation of the LED lighting device will be described.

In Fig. 1, in the case where the dimmer DM is operated and a suitable dimming degree is set, when the AC source AC is turned on, the first bleeder current circuit 12 of the bleeder current extracting unit BCS is controlled and activated by the LED driving IC 11 in each half-wave of AC voltage, and thus first bleeder current is extracted from the AC source AC via the timer circuit TM of the dimmer DM and the resistor R4. The first bleeder current is supplied to the dimmer DM, and thus the phase control element TRIAC is turned on at a phase corresponding to the dimming degree.

When the phase control element TRIAC is turned on, the second bleeder current circuit 13 of the bleeder current extracting unit BCS is controlled and activated by the LED driving IC 11, and thus second bleeder current is extracted from the AC source AC via the phase control element TRIAC of the dimmer DM and the resistor R5. The second bleeder current is supplied to the dimmer DM, and thus hold current of the phase control element TRIAC is secured. Therefore, even if current, which flows through the phase control element TRIAC and lights the LED 20, is small and less than the hold current, an on-state can be kept, by making the hold current flow in the phase control element TRIAC during a period of ON of AC voltage.

AC voltage subjected to phase control by the dimmer DM is input to the LED lighting device LOC from the pair of input terminals t1 and t2, rectified by the rectifying circuit RC and divided by the voltage divider circuit VD1, and voltage, which is obtained by diversion, of the resistor R6 is used for charging the capacitor C6 and input to the PL terminal of the LED driving IC 11. The LED driving IC 11 monitors voltage of each half-wave of AC input to the PL terminal, and performs positive characteristic feed-forward control to make conversion into a PWM signal corresponding to the conduction angle of the dimmer DM and operates the converter 10.

Consequently, the converter 10 outputs DC corresponding to the dimming degree to the LED 20 connected to the output end thereof, and thus the LED 20 is subjected to light control and lit in accordance with the dimming degree.

However, when AC voltage input from the pair of input terminals t1 and t2 exceeds a preset predetermined value, the positive characteristic feed-forward control limiting unit 14 operates and fixes the AC voltage input to the PL terminal of the LED driving IC 11 to the predetermined value. That is, since a value of Zenner voltage of the Zenner diode ZD1 of the positive characteristic feed-forward controllimiting unit 14 is set to the predetermined value, a value of the voltage obtained by division by the voltage diverter circuit VD1 is fixed to the predetermined value.

Accordingly, when the input AC voltage exceeds the predetermined value, the positive characteristic feed-forward control limiting unit 14 stops the positive characteristic feed-forward control. Consequently, the output current of the converter 10 does not increase since the positive characteristic feed-forward control is stopped. On the other hand, since only output voltage of the converter 10 increases in accordance with an increase in the input voltage, the degree of increase is suppressed.

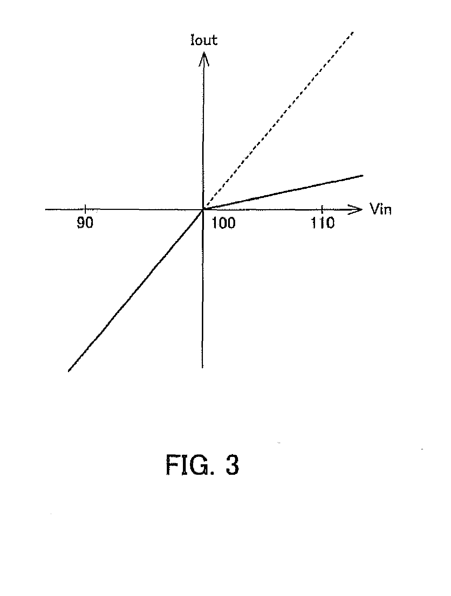

Next, a relationship between AC voltage Vin and output current Iout of the converter 10 will be described with reference to Fig. 3. In Fig. 3, the horizontal axis represents the AC voltage Vin(%) and the vertical axis represents the output current Iout, respectively. Additionally, regarding values attached to the horizontal axis, 100 represents a predetermined value, 90 represents a value lower than the predetermined value by 10%, and 110 represents a value increasing by 10%, respectively. Moreover, relative values are indicated on the vertical axis.

As revealed in Fig. 3, the positive characteristic feed-forward control is performed until the AC voltage Vin reaches the predetermined value. Consequently, the LED 20 is subj ected to light control and lit in accordance with the dimming degree of the dimmer DM.

However, when the AC voltage Vin is not less than the predetermined value, the positive characteristic feed-forward control is stopped. Consequently, even if the dimmer DM is operated, it becomes impossible to make the LED 20 increasingly emit light in accordance with the dimming degree. Moreover, the dotted line in Fig. 3 indicates a relationship between the AC voltage Vin and the output current Iout of the converter 10 in the case where the positive characteristic feed-forward control unit 14 is not provided.

As described above, the LED lighting device of the embodiment includes: the positive characteristic feed-forward controlling unit for performing the positive characteristic feed-forward control for monitoring input the AC voltage and changing the output current of the converter 10 in accordance with the value of the AC voltage; and the positive characteristic feed-forward control limiting unit 14 for limiting the positive characteristic feed-forward control when the AC voltage reaches a predetermined value. Thus, when AC voltage exceeding the preset predetermined value is input, the positive characteristic feed-forward control is stopped so that the output current of the converter 10 can be prevented from being undesirably increased.

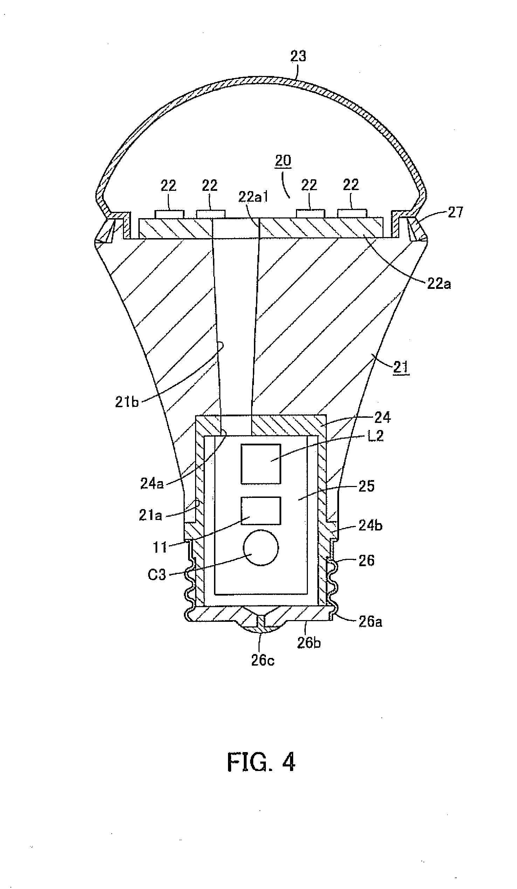

Next, Fig. 4 shows an LED bulb as one form of an illumination apparatus provided with the LED lighting device. Moreover, the same symbols are attached to the same constitutions as those of the above embodiment and description thereof will be omitted.

The illumination apparatus (LED bulb) includes, as main components, an illumination apparatus main body (lamp main body) 21, the LED 20, a globe 23, an insulating case 24, an LED lighting circuit substrate 25 and a cap 26.

The illumination apparatus main body 21 is composed of a heat conductive substance such as aluminum, and forms a circular cone, and in Fig. 4, mechanically supports the LED 20 at an upper end of the main body 21 while forming a heat conductive relationship between the main body 21 and the LED 20. Additionally, the insulating case 24 is housed in a recessed portion 21a formed in a lower part of the main body 21. Further, the illumination apparatus main body 21 includes a through hole 21b vertically penetrating the illumination apparatus main body 21. Furthermore, the illumination apparatus main body 21 can have a heat radiating fin formed on its outer face so as to increase a heat radiation area.

The LED 20 has a plurality of LED modules 22, and the LED modules 22 are mounted on a circular substrate 22a. Additionally, the substrate 22a has a wiring hole 22a1 at a position corresponding to the through hole 21b of the illumination apparatus main body 21. Further, the substrate 22a is mainly composed of a heat conductive substance such as aluminum so that heat generated in the LED 20 conducts to the illumination apparatus main body 21 via the substrate 22a. The plurality of LED modules 22 are connected to the LED lighting circuit substrate 25 via conductive lines (not shown) wired via the through hole 21b and the wiring hole 22a1.

The globe 23 is attached to the upper end of the illumination apparatus main body 21 in Fig. 4 so as to surround the LED 20 including the plurality of LEDmodules 22, protects a charging portion of the LED 20 and mechanically protects the LED 20. Moreover, if necessary, a light controlling unit (not shown), for example, a light diffusing unit may be disposed on or formed integrally with the globe 23 so as to control light distribution characteristics. Moreover, in an external appearance, a ring 27 having an inclined face disposed at a border portion between the globe 23 and the illumination apparatus main body 21 has an outer face having reflectivity, reflects light radiated downward in Fig. 4 from the globe 23 and has a function to correct the light distribution characteristics.

The insulating case 24 is composed of an insulative substance with respect to the illumination apparatus main body 21, for example, plastics or ceramics, and housed in the reces sed portion 21a of the illumination apparatus main body 21, and houses the LED lighting circuit substrate 25 therein. Additionally, in a state where the insulating case 24 is cylindrical, a lower end thereof is opened, housed in the recessed portion 21a of the illumination apparatus main body 21, an upper end thereof is a block end having a wiring hole 24a formed corresponding to the through hole 21b of the illumination apparatus main body 21 and the case 24 includes a flange portion 24b on an outer face of its middle portion. The flange portion 24b comes into contact with the lower end of the illumination apparatus main body 21 in Fig. 4 with the insulating case 24 housed in the recessed portion 21a of the illumination apparatus main body 21.

The LED lighting circuit substrate 25 is housed in the insulating case 24 with the LED lighting circuit LOC in Fig. 1 mounted on the substrate. In Fig. 4, the circuit components, to which the same symbols in Fig. 1 are attached, are relatively large. The other circuit components are relatively small and not shown, but they are mounted on the backside of the LED lighting circuit substrate 25 in Fig. 4.

The cap 26 is an E26 type screw cap attached to a lower part of the insulating case 24, and closes a lower opening end of the insulating case 24. That is, the cap 26 has a cap shell 26a, an insulative body 26b and a center contact 26c. The cap shell 26a is attached to the lower part of the insulating case 24, has an upper end brought into contact with the flange portion 24b of the insulating case 24 in Fig.4, and is connected to one of the input terminals t1 or t2 of the LED lighting circuit substrate 25 via a lead wire (not shown). The insulating body 26b blocks a lower end of the cap shell 26a in the figure of the cap 26a and supports the center contact 26c so that the center contact 26c is insulative to the cap shell 26a. The center contact 26c is connected to the other input terminal t1 or t2 of the LED lighting circuit substrate 25 via a lead wire (not shown).

Moreover, the illumination apparatus includes the LED lighting device of the above embodiment, therefore, when the AC voltage exceeding a preset predetermined value is input, the positive characteristic feed-forward control is stopped so that the output current of the converter 10 can be prevented from being undesirably increased.

Further, in the above embodiment, the AC voltage for the positive characteristic feed-forward control may be monitored in either the AC state or the DC state. In the case of monitoring the AC voltage in the DC state, DC is obtained by rectifying AC so as to operate the converter, and the DC can be used.

Additionally, a circuit constitution of the positive characteristic feed-forward control limiting unit is not particularly limited. For example, predetermined feed-forward control can be performed by, connecting a Zener diode to an input terminal portion of the positive characteristic feed-forward controlling unit in parallel and setting a Zener voltage of the Zener diode to a predetermined voltage.

Additionally, since the predetermined voltage in limiting the positive characteristic feed-forward control is not limited to a rated value of AC voltage, it can be desirably set. For example, the value of the predetermined voltage can be arbitrarily set in a range of **±**10% of the rated value of AC voltage. Moreover, the predetermined value may be preset in shipping from a factory, or may be set in starting the use of the apparatus.

Additionally, the illumination apparatus is a concept in which various apparatuses for performing illumination by using an LED as a light source are contained. For example, lighting equipment or a marker lamp is cited which includes an LED bulb or LED light source substitutable for various lamps such as an incandescent bulb, fluorescent lamp and high-pressure discharge lamp as existing lighting sources. Additionally, the illumination apparatus main body is a portion which remains after removing the LED lighting device and LED from the illumination apparatus.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. An LED lighting device comprising:
a rectifying circuit (RC) for rectifying AC voltage that is input from an AC source (AC) via a phase control type dimmer (DM);
a converter (10) for converting DC output voltage of the rectifying circuit (RC) and lighting an LED (20);
a positive characteristic feed-forward controlling unit (11) for monitoring the AC voltage and changing the output current of the converter (10) in accordance with a value of the AC voltage; and
a positive characteristic feed-forward control limiting unit (14) for, when the AC voltage reaches a predetermined value, limiting control performed by the positive characteristic feed-forward controlling unit (11).

2. An illumination apparatus comprising:
an illumination apparatus main body (21);
the LED lighting device of claim 1 disposed on the illumination apparatus main body (21); and
the LED (20) connected to an output end of the converter (10) of the LED lighting device and supported by the illumination apparatus main body (21).
